Europäisches Patentamt

European Patent Office

Office européen des brevets

(19)

(11) Numéro de publication: **0 108 002**
**A1**

(12) # DEMANDE DE BREVET EUROPEEN

(21) Numéro de dépôt: **83402019.0**

(22) Date de dépôt: **18.10.83**

(51) Int. Cl.³: **H 01 M 8/18**
**C 25 C 7/00, H 01 M 8/22**

(30) Priorité: **21.10.82 FR 8217625**

(43) Date de publication de la demande:
**09.05.84 Bulletin 84/19**

(84) Etats contractants désignés:
**BE DE FR GB IT NL SE**

(71) Demandeur: **TRANSPORTS RECHERCHES ETUDES GROUPEMENT D'INTERET ECONOMIQUE (T.R.E.G.I.E.)**
**67, rue des Bons-Raisins**
**F-92500 Rueil Malmaison(FR)**

(72) Inventeur: **Bronoel, Guy**
**13, rue Jean de la Bruyère**
**F-78000 Versailles(FR)**

(74) Mandataire: **Réal, Jacques et al,**
**Régie Nationale des Usines Renault SCE 0804**
**F-92109 Boulogne Billancourt Cedex(FR)**

(54) Dispositif de fonctionnement d'un générateur électrochimique à électrode négative de zinc.

(57) L'invention a pour objet un dispositif de fonctionnement d'un générateur électrochimique à électrode de zinc du type dit électrode dispersée, caractérisé en ce que ces particules entrent en contact par sédimentation avec la face supérieure négative (6) d'un collecteur de courant bipolaire plan (3) lorsque le fluide constitué par l'électrolyte alcalin et les particules (9) n'est pas en circulation, le fluide étant susceptible d'être mis en circulation et d'être guidé dans une pluralité de canaux paralèles (15) sensiblement horizontaux de section rectangulaire de façon intermittente tant lors des phases de recharge que de décharge et selon un cycle périodique de marche-arrêt caractérisé en ce que le temps d'arrêt est supérieur au temps de marche.

FIG.1

## DISPOSITIF DE FONCTIONNEMENT D'UN GENERATEUR ELECTROCHIMIQUE A ELECTRODE NEGATIVE DE ZINC.

La présente invention s'applique à un dispositif de recharge en zinc pour des électrodes négatives utilisables dans un générateur électrochimique du type dans lequel les électrodes sont immergées dans un électrolyte constitué par un milieu alcalin chargé en sels de zinc, ainsi qu'un dispositif de recharge par un courant électrique continu pour sa mise en oeuvre et son application notamment aux batteries zinc-nickel.

Le zinc peut constituer l'électrode négative d'accumulateurs Zn-Ni ou Zn-Air réversibles fonctionnant en milieu alcalin concentré. Cependant, une des principales difficultés rencontrées dans la mise au point de tels générateurs tient à la quasi impossibilité de soumettre l'électrode de zinc à un grand nombre de cycles de charge et décharge.

En effet, le cyclage d'une électrode de zinc en forme de plaque provoque la formation de dendrites qui mettent en court circuit les électrodes et un changement de forme de l'électrode qui se manifeste par un amincissement pour une partie et l'accroissement de son épaisseur pour une autre.

Différents procédés ont été présentés pour remédier à ces inconvénients. L'un des moyens permettant l'obtention d'un nombre de cycles charge-décharge élevé, de l'ordre de 500 par exemple, consiste à mettre en vibration les électrodes. Ce système se révèle malheureusement lourd, coûteux et consommateur d'énergie.

L'un des buts de la présente invention est précisément de réaliser un dispositif de recharge en zinc pour des électrodes négatives utilisables dans un générateur électrochimique constituant, le cas échéant, l'organe de recharge lui-même et qui permettent de recharger l'électrode de zinc pendant un grand nombre de cycles de charge et

0108002

de décharge sans entraîner la formation de dendrites produisant des courts-circuits internes ni de changements de forme des électrodes.

A cet effet, l'invention propose un dispositif de fonctionnement d'un générateur électrochimique à électrode négative de zinc et à électrolyte alcalin chargé en sels de zinc dans lequel l'électrode zinc est du type connu dit à électrode dispersée et constituée par une pluralité de particules de forme sensiblement sphérique comprenant un coeur formé d'un matériau résistant à l'attaque électrochimique qui est en totalité ou partiellement revêtu d'un revêtement conducteur, et dont la densité est supérieure à celle de l'électrolyte, caractérisé en ce que ces particules entrant en contact par sédimentation avec la face supérieure négative d'un collecteur de courant bipolaire plan lorsque le fluide constitué par l'électrolyte alcalin et lesdites particules n'est pas en circulation et se chargent en zinc préférentiellement au collecteur, ledit fluide étant susceptible d'être mis en circulation et d'être guidé dans une pluralité de canaux parallèles sensiblement horizontaux de section rectangulaire dont la face inférieure est constituée par ladite face supérieure du collecteur plan, dont la face supérieure est constituée par un séparateur poreux à l'électrolyte s'opposant au contact direct desdites particules avec l'électrode positive du générateur, et dont les faces latérales sont formées d'un matériau inerte et résistant au milieu alcalin, ladite mise en circulation du fluide étant réalisée de façon intermittente tant lors des phases de recharge que de décharge et selon un cycle périodique de marche-arrêt caractérisé en ce que le temps d'arrêt est supérieur au temps de marche. Selon une caractéristique de l'invention, le rapport entre le temps d'arrêt et le temps de marche lors de la phase de décharge est inférieur au même rapport lors de la phase de recharge ; le quotient entre ces deux rapports est compris entre 1,5 et 3 et est de préférence égal à 2.

Le rapport entre le temps d'arrêt et le temps de marche lors de la phase de décharge est compris entre 3 et 15 et de préférence égal à 10.

Le rapport entre le temps d'arrêt et le temps de marche lors de la phase de charge est compris entre 1,5 et 8 et de préférence égal à 5.

Les particules présentent un diamètre compris entre 0,0001 m et 0,0006 m et, préférablement entre 0,0004 m et 0,0005 m avec la potasse concentrée utilisée comme électrolyte. Le coeur des particules est formé d'un matériau inerte chimiquement (électriquement isolant) et dont la densité est comprise entre une valeur sensiblement égale et une valeur légèrement supérieure à celle de l'électrolyte à son minimum de densité normal. Le volume occupé par les particules ramassées sur elles-mêmes est compris entre 15 % et 25 % du volume du fluide particules-électrolyte mis en circulation et de préférence égal à 17 %. La vitesse homogène de circulation du fluide est comprise entre 0,05 et 0,7 mètre par seconde.

Selon une caractéristique de l'invention, le collecteur de courant est réalisé en tôle d'acier, à faible épaisseur de l'ordre de 0,5 millimètre, et dont la face en contact avec les particules est cadmiée ou cuivrée superficiellement tandis que sa face opposée en contact avec l'électrode positive est nickelée. La face négative du collecteur de courant déborde à ses extrèmités par rapport au séparateur poreux d'une longueur de l'ordre de l'épaisseur de l'intervalle ménagé entre la face négative du collecteur et le séparateur, de manière à éviter un dépôt de zinc sur la face négative par "effet de bord".

D'autres buts, avantages et caractéristiques apparaîtront à la lecteure de la description d'un mode de réalisation de l'invention, faite à titre non limitatif et en regard du dessin annexé où :

- la figure 1 représente en coupe longitudinale avec arrachements l'assemblage de deux éléments de recharge selon l'invention, selon le plan de coupe I de la figure 3 ;

- la figure 2 représente en coupe transversale avec arrachements l'assemblage de la figure 1, selon le plan de coupe II de la figure 3 ;

- la figure 3 représente en vue de dessus avec arrachements un élément de recharge selon l'invention ;

- la figure 4 représente à plus grande échelle la partie de la figure 3 encadrée sous le repère IV ;

- la figure 5 est la coupe à plus grande échelle et avec arrachements de la partie active d'un élément de recharge selon l'invention ;

- la figure 6 est une représentation schématique en perspective d'une batterie d'accumulateur électrique utilisant le procédé et des éléments de recharge en zinc selon l'invention.

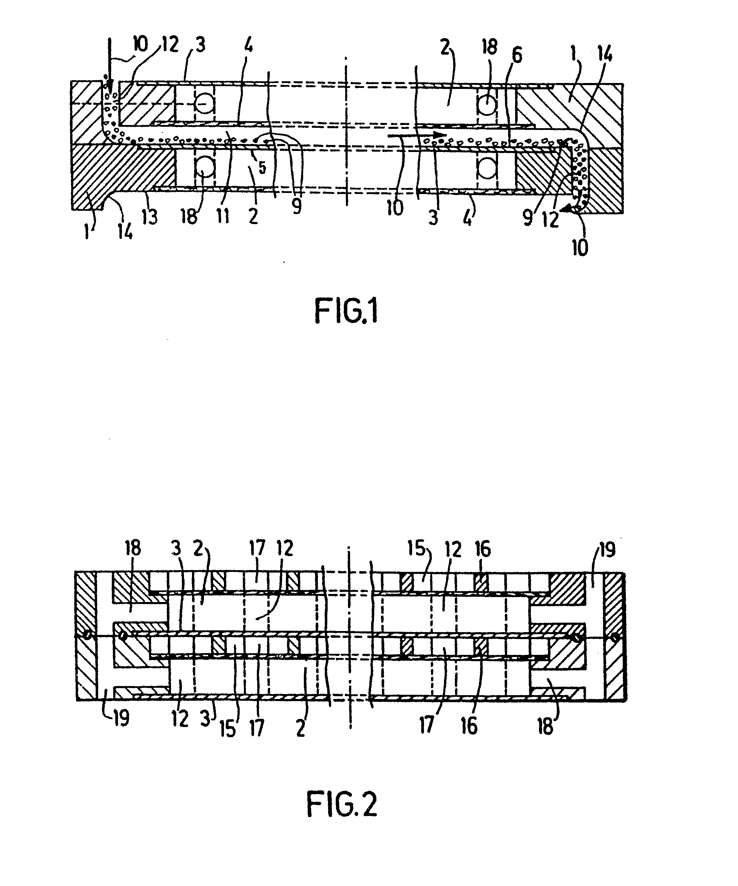

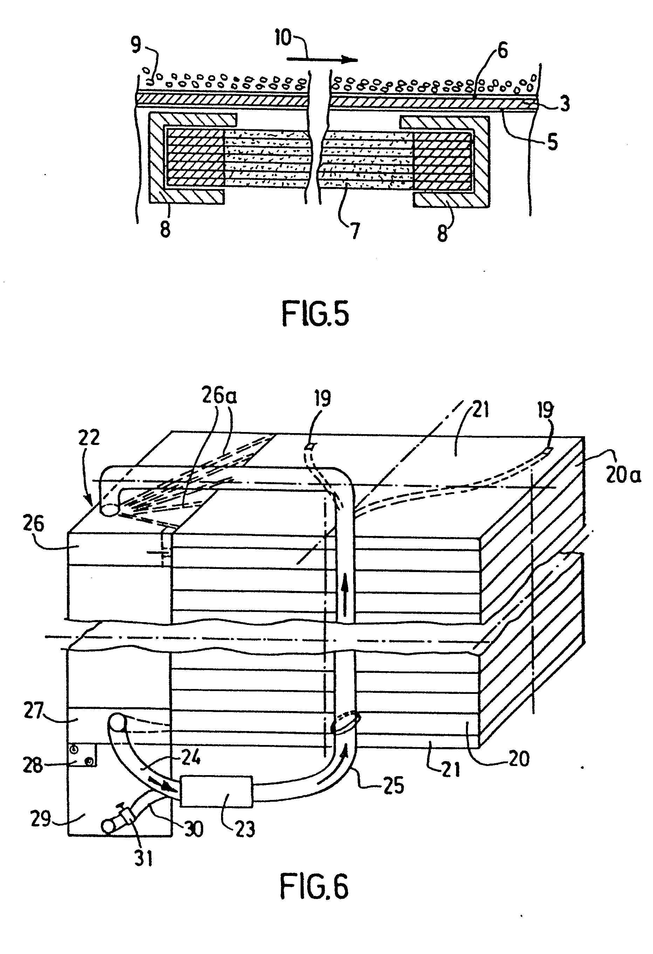

Si l'on se reporte à la figure 1, on voit que chaque élément de recharge selon l'invention comporte dans un cadre de raccordement 1 en une matière plastique isolante électrique et chimiquement inerte vis-à-vis de l'électrolyte, telle que du polypropylène ou du chlorure de polyvinyle PVC, une électrode positive 2 emprisonnée entre un collecteur électrique 3 et une plaque poreuse 4. Le collecteur 3 est une plaque de grande dimension en tôle d'acier revêtue, du côté de l'électrode positive, d'une mince couche 5 de nickel, d'épaisseur de 5 à 25 microns ($\mu$ m) ( voir la figure 5) et, du côté opposé formant l'électrode négative, d'une mince couche 6 de cadmium d'épaisseur de 3 à 10 microns ($\mu$ m) également.

Le détail de la réalisation de l'électrode positive est représenté sur la figure 5. La partie active de cette électrode positive

métalliques 7               à l'état déchargé
est constituée par des lames de feutre /imprégnées/d'hydroxyde de
nickel (hydroxyde nickeleux Ni(OH)$_2$) dans leur partie centrale
active, empilées sur une épaisseur d'environ 5 millimètres et insérées à chacune de leurs extrèmités non imprégnées dans un support 8
à section en forme de U et réalisé par pliage d'une tôle de nickel
d'environ 0,5 millimètre d'épaisseur. Comme on le voit sur la figure 5,
la longueur des bras des pinces en U est sensiblement égale à l'épaisseur de l'empilage des lames de feutre 7 et le bras situé du côté du
collecteur 3 est éventuellement plus long que le bras situé à l'opposé.

Selon l'invention, l'électrode négative reliée électriquement
à la couche 6 de cadmium et au collecteur électrique 3, est formée
par une pluralité de particules métallisées 9 dont le flux est représenté sur la figure 1 par des flèches 10. Ces particules sensiblement sphériques dont le diamètre est compris entre 0,0001 et 0,0006 m
et plus avantageusement entre 0,0004 et 0,0005 m , sont constituées
d'un coeur en un matériau inerte résistant à l'attaque électrochimique
lors du fonctionnement du générateur tel que du verre ou un polymère
et qui présente, de préférence, une densité voisine et légèrement
supérieure à celle de l'électrolyte à son minimum de densité normal.
Les particules sont superficiellement revêtues d'un mince dépôt
métallique non soluble dans l'électrolyte, par exemple, du cadmium
déposé sur un film de nickel ou de cuivre. Ces particules métallisées,
lorsqu'elles sont en contact avec un collecteur dont le potentiel
est plus négatif que celui correspondant au dépôt de zinc et en
présence d'une solution de zincate, se recouvrent d'une couche de
zinc qui peut atteindre 0,0001 m . A l'inverse, lorsque le collecteur
est polarisé plus anodiquement que le potentiel de dépôt du zinc, on
observe une dissolution du zinc recouvrant la particule.

Les particules mélangées avec l'électrolyte dans lequel sont
immergées les électrodes forme un fluide bi-phasique. L'électrolyte
est constitué, de préférence, par une solution concentrée de potasse
KOH (de 5 à 10 moles par litre) comportant en outre 3 % de silicate

de potassium. Les particules 9 sont mises en circulation par le flux d'électrolyte activé par une pompe capable de propulser un mélange de particules et d'électrolyte réalisé selon les proportions en volume précisées par après.

Pour obtenir une propulsion optima des particules par le flux d'électrolyte traversant l'intervalle 11 ménagé entre la face négative cadmiée 6 du collecteur 3 et la plaque poreuse 4, la concentration en particules de l'électrolyte est telle que celles-ci ramassées sur elles-mêmes en un seul tas, occupent entre 15 et 25 % du volume du mélange des particules et de l'électrolyte mis en circulation par la pompe. Le débit du fluide traversant l'intervalle 11 est choisi de façon que la vitesse de circulation de l'électrolyte et des particules qu'il entraîne soit comprise entre 0,05 et 0,7 mètre par seconde, de préférence à 0,15 m/s, afin de pouvoir entraîner les particules même lorsque le collecteur 3 est incliné sur une pente faiblement montante sans risquer une abrasion, sur ce collecteur 3, de la couche de zinc recouvrant ces particules 9.

Sur la figure 1, on voit que les éléments de charge sont identiques et sont superposables deux à deux en alternant la position des canaux 12 de passage transversal de l'électrolyte pour les disposer en entrée sur un élément et en sortie sur l'élément adjacent suivant. L'intervalle 11 est ménagé par une face en creux 13 présentant un arrondi de guidage 14 des particules 9 disposé alternativement d'un côté et de l'autre des éléments.

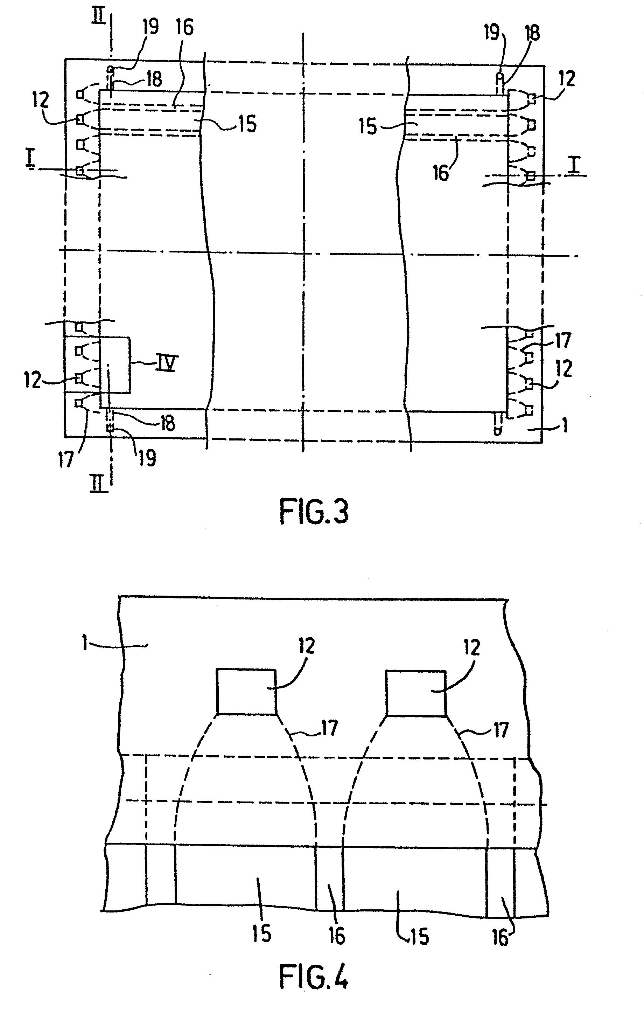

Si l'on se reporte à la figure 2 qui est une coupe dans un plan perpendiculaire au plan de la coupe de la figure 1, on voit que l'intervalle 11 est subdivisé en canaux longitudinaux 15 de forme aplatie, par des séparateurs 16 en un matériau poreux tel que polyèthylène PVC ou ABS. Chacun des canaux 15 est relié à chacune de ses extrémités à un canal de transfert constituant le canal de passage transversal 12 et présentant, de préférence, une section carrée ou rectangulaire (voir les figures 3 et 4). Cette liaison s'effectue par un canal intermédiaire 17 dont la section se transforme progressivement depuis la forme d'un parallèlogramme aplati à la sortie du canal longitudinal 15 jusqu'à la section du canal de transfert 12 sensiblement carrée. Des canaux latéraux de dégazage 18 peuvent être ménagés dans le cadre de raccordement 1, du côté parallèle aux canaux longitudinaux 15, et relient/ alors chacun une face latérale de l'électrode positive 2 à un canal collecteur de dégazage 19 qui s'emboîte sur le canal de dégazage de l'élément voisin pour réaliser une colonne de dégazage verticale.

Selon une caractéristique importante du mode de réalisation représenté sur la figure 1 et confirmé par la figure 2, la face 5 du collecteur de courant 3 qui est en contact avec l'électrode positive, est enchassée à ses extrémités dans le cadre de raccordement 1 en matière plastique tandis que sa face négative 6 reste libre et en contact avec les particules 9 pour constituer la paroi d'entrée des canaux 12. Comme on peut le voir sur la figure 1, cette face négative cadmiée 6 déborde à ses extrémités par rapport au séparateur poreux 4 d'une longueur voisine de celle de l'épaisseur de l'intervalle 11 constituant l'épaisseur des canaux 12. Cette disposition évite qu'il ne se forme un dépôt de zinc sur cette face négative 6 par un "effet de bord" des courants électriques qui parcourent l'électrolyte entre la paroi poreuse 4 et la face négative 6. Lorsque l'élément de charge est utilisé également à la décharge, dans le cas d'une utilisation en accumulateur par exemple, le séparateur poreux ou fibreux 4 peut être obturé dans les régions qui ne sont pas situées en face de la partie active des lames de feutre métalliques 7.

La figure 6 représente, en perspective schématique, une batterie d'éléments de recharge et de décharge selon l'invention agencée pour fonctionner comme une batterie électrique de stockage et de décharge d'énergie électrique. Cette batterie est constituée d'un empilage vertical d'éléments de charge 20 selon l'invention, serrés entre des plaques d'extrémité 21. Ces éléments 20 empilés sont alimentés en électrolyte chargé en particules 9 à partir de l'élément supérieur 20a et d'un bloc collecteur distributeur 22 par une pompe 23 qui aspire l'électrolyte et les particules qu'il contient dans une conduite d'aspiration 24 et le refoule par une conduite de refoulement 25 dans un bloc supérieur de distribution 26. Des cloisons de répartition 26a représentées schématiquement en pointillés, sont prévues dans le bloc supérieur de distribution 26 pour répartir de la façon la plus égale possible, le flux d'électrolyte et surtout de particules à l'entrée de chacun des canaux longitudinaux aplatis 15 de l'élément supérieur 20a. En effet, les canaux 15 de chaque élément 20, tels qu'ils sont assemblés dans la batterie, débouchent à leur extrémité aval exactement en face des canaux de transfert 12 de l'élément immédiatement inférieur si bien qu'ils constituent dans la batterie assemblée des séries de veines parallèles en zig-zag parcourues par l'électrolyte et les particules 9 qu'elles portent sans aucune communication entre ces veines jusqu'à la réunion des divers flux séparés dans un collecteur inférieur 27 relié par un jeu de vannes 28 à un réservoir de vidange 29 de l'électrolyte. Ce réservoir de vidange 29 permet de vidanger la batterie de son électrolyte pendant les phases de repos de façon à éviter sa décharge par les courants de shunt parasites qui existent en l'absence de toute liaison entre les bornes positive et négative de la batterie. Pour remettre l'électrolyte et les particules 9 en service après leur vidange dans le réservoir 29, une conduite de reprise 30 contrôlée par une vanne 31 relie le bas du réservoir 29 à l'aspiration de la pompe 23. Le réservoir 29 peut comporter un filtre permettant de séparer les particules de l'électrolyte qui à l'état chargé est constitué essentiellement de potasse et à l'état déchargé, comporte une forte charge en zinc sous forme de zincates solubles dans la potasse à forte concentration. Le fonctionnement de l'élément de charge selon l'invention, isolé ou monté en batterie, s'effectue de la façon suivante. Après remplissage en électrolyte chargé en particules pour réaliser la recharge en zinc, les électrodes de l'élément ou respectivement de la batterie sont mises sous tension électrique de recharge et l'électrolyte est mis en circulation par la pompe (pompe 23 de la batterie).

Diverses modalités sont possibles pour le contrôle de la circulation de l'électrolyte et des particules pendant la recharge en zinc.

Il convient d'effectuer la recharge en circulation intermittente du fluide. Le rapport entre la durée des temps d'arrêt et la durée des temps de marche est compris entre 3 et 15 et est de préférence égal à 10. La durée des phase d'arrêt ne doit pas être supérieure à deux minutes pour obtenir des dépôts de zinc réguliers sur les particules 9. Les sections des conduites et canalisations parcourues par le flux total ou partiel du mélange particules-électrolyte sont choisies de manière à réaliser le meilleur compromis entre les courants de shunt qui augmentent avec la section des veines de fluide et des canaux collecteurs et les pertes de charge dans ces canalisations qui diminuent quand la section des canalisations augmente. Les essais expérimentaux ont montrés que les meilleurs résultats de recharge sont obtenus avec des durées d'arrêt de trente secondes suivies de mises en circulation des particules et de l'électrolyte pendant environ 5 secondes.

Pour les modalités de décharge de l'élément ou de la batterie fonctionnant comme source de courant électrique à ses bornes, on peut adopter un régime de circulation intermittent. Toutefois, le rapport entre le temps d'arrêt et le temps de marche est compris entre 1,5 et 8 et de préférence égal à 5.

Pour faire comprendre quels résultats techniques la présente invention permet d'obtenir avec une batterie électrique, on va maintenant préciser quelques unes des caractéristiques chiffrées obtenues avec une batterie expérimentale réalisée selon l'invention.

Dans une batterie de 30 éléments, dont la tension moyenne de charge est pour chacun de 1,5 volts, on utilise des particules de diamètre 0,3 à 0,5 mm dont le coeur présente une densité de 1,1 et dont le volume d'encombrement (en section carrée enveloppant les particules) atteint 17 % du volume total de l'électrolyte. Chaque élément contient ainsi environ 1 250 grammes d'un mélange d'électrolyte (KOH à 8 moles par litre), de zinc et de particules et pèse environ 3 200 grammes pour une capacité théorique de charge de 220 Ampères/heure. Une pompe de puissance théorique 25 watts entraî-née par un moteur électrique consommant 60 watts suffit à assurer la circulation de l'électrolyte dans la batterie. Le réservoir de vidange 29 de l'électrolyte et des particules doit avoir une capacité d'au moins 25 litres et les particules qui, à l'état de charge complète, portent environ 6 kilogrammes de zinc, représentent un volume d'environ 3,5 litres. La batterie de 30 éléments atteint avec tous ses organes annexes tels que la pompe et les connexions électriques, une masse d'environ 100 kilogrammes et peut stocker une énergie électri-que d'environ 7 kWh. La batterie contient un réservoir annexe qui sert au dégazage des électrodes positives via les canaux 18.

Bien entendu, l'invention n'est pas limitée aux modes de réalisation décrits et représentés et elle est susceptibles de nombreuses variantes accessibles à l'homme de l'art, sans que l'on ne s'écarte de l'esprit de l'invention.

Ainsi, pendant les périodes de charge, on peut interrompre le courant électrique de charge au cours des séquences de mise en circulation. Le collecteur 3 peut être constitué, non pas par une mince feuille métallique comme décrit précédemment, mais aussi par un polymère conducteur de l'électricité, tel que l'ABS chargé en carbone, recouvert du côté de l'électrode positive 2 d'une couche de nickel. La partie de la feuille de polymère (d'une épaisseur d'environ 1 millimètre) qui vient en contact avec les billes peut alors ne pas être cuivrée ou cadmiée mais laissée à l'état brut.

Pour les collecteurs 3 constitués par une feuille métallique telle que de la tôle d'acier, le côté formant l'électrode négative peut ne pas être cadmié mais cuivré. De même dans la sous couche de métallisation des particules 9, le cadmium (déposé le cas échéant sur un film de nickel ou de cuivre) peut être remplacé par une couche de cuivre.

Dans la batterie d'éléments de recharge représentée schématiquement à la figure 6, au lieu d'alimenter simultanément et donc d'une façon sensiblement égale toutes les veines délimitées par les canaux 12 et 15, (Fig. 2), on peut alimenter successivement des canaux ou groupes de canaux 12, 15 à l'aide d'un organe de distribution tel qu'une machine tournante ou alternative qui périodiquement obture ou, le cas échéant, ouvre les entrées des canaux 12,15 délimitant les veines d'écoulement pour le mélange des particules 9 et de l'électrolyte.

Les canaux 12, 15 peuvent présenter des sections sensiblement identiques, ce qui conduit à la suppression de la réduction de section du canal intermédiaire 17.

Des additifs donnant une meilleure morphologie au dépôt de zinc peuvent être ajoutés à l'électrolyte constitué principalement par une solution concentrée de potasse. Des batteries expérimentales réalisées selon l'invention ont ainsi pu supporter plus de 1000 cycles de charge et décharge.

REVENDICATIONS.

1.Dispositif de fonctionnement d'un générateur électrochimique à électrode négative de zinc et à électrolyte alcalin chargé en sels de zinc dans lequel l'électrode de zinc est du type connu dit électrode dispersée et constituée par une pluralité de particules (9) de forme sensiblement sphérique comprenant un coeur formé d'un matériau résistant à l'attaque électrochimique qui est en totalité ou partiellement revêtu d'un revêtement conducteur, et dont la densité est supérieure à celle de l'électrolyte, caractérisé en ce que ces particules entrent en contact par sédimentation avec la face supérieure négative (6) d'un collecteur de courant bipolaire plan (3) lorsque le fluide constitué par l'électrolyte alcalin et lesdites particules (9) n'est pas en circulation et se chargent en zinc préférentiellement au collecteur (3), ledit fluide étant susceptible d'être mis en circulation et d'être guidé dans une pluralité de canaux parallèles (15) sensiblement horizontaux de section rectangulaire dont la face inférieure est constituée par ladite face supérieure (6) du collecteur plan, dont la face supérieure est constituée par un séparateur poreux (4) à l'électrolyte s'opposant au contact direct desdites particules avec l'électrode positive (2) du générateur, et dont les faces latérales sont formées d'un matériau inerte et résistant au milieu alcalin, ladite mise en circulation du fluide étant réalisée de façon intermittente tant lors des phases de recharge que de décharge et selon un cycle périodique de marche-arrêt caractérisé en ce que le temps d'arrêt est supérieur au temps de marche.

2. Dispositif selon la revendication 1,caractérisé en ce que le rapport entre le temps d'arrêt et le temps de marche lors de la phase de recharge est supérieur au même rapport lors de la phase de décharge.

3. Dispositif selon l'une des revendications 1 ou 2, caractérisé en ce que le rapport entre le temps d'arrêt et le temps de marche lors de la phase de recharge est compris entre 3 et 15.

4. Dispositif selon la revendication 3, caractérisé en ce que le rapport entre le temps d'arrêt et le temps de marche lors de la phase de décharge est compris entre 1,5 et 8.

5. Dispositif selon l'une des revendications 1 ou 2, caractérisé en ce que le diamètre desdites particules est compris entre 0,0001 m et 0,0006 m.

6. Dispositif selon l'une des revendications 1 ou 2, caractérisé en ce que ladite circulation se fait selon une vitesse homogène comprise entre 0,05 et 0,17 m/s.

7. Dispositif selon l'une des revendications 1 ou 2, caractérisé en ce que le volume occupé par lesdites particules (9) est compris entre 15 % et 25 % du volume de l'électrolyte.

8. Dispositif selon l'une des revendications 1 ou 2, caractérisé en ce que lesdits canaux ont une largeur comprise entre 0,02 et 0,05 m, une hauteur comprise entre 0,002 m et 0,005 m et une longueur comprise entre 0,15 m et 0,75 m.

9. Dispositif selon l'une des revendications 1 ou 2, caractérisé en ce que le collecteur de courant (3) est réalisé en tôle d'acier à faible épaisseur de l'ordre de 0,5 millimètre et dont la face (6) en contact avec les particules est cadmiée ou cuivrée au moins superficiellement tandis que sa face opposée (5) en contact avec l'électrode positive (2) est nickelée.

10. Dispositif selon l'une des revendications 1 ou 2, caractérisé en ce que la face négative (6) du collecteur de courant (3) déborde à ses extrémités par rapport au séparateur poreux d'une longueur supérieure ou égale à 0,5 fois la hauteur desdits canaux de manière à éviter un dépôt de zinc sur la face négative par "effet de bord".

11. Dispositif selon l'une des revendications 1 à 2, caractérisé en ce que le collecteur (3) est constitué par un polymère conducteur, d'une épaisseur d'environ 1 millimètre, recouvert du côté de l'électrode positive (2) d'une couche de nickel.

12. Dispositif selon la revendication 11, caractérisé en ce que le séparateur poreux (4) est obturé en regard des parties de l'électrode positive (2) qui, bien que conductrices, sont dépourvues de matière active.

13. Batterie de dispositifs selon l'une des revendications 1 ou 2, caractérisé en ce qu'ils sont superposés verticalement les uns au-dessus des autres, en ce que les canaux superposés sont reliés entre eux par des canaux de transfert (12) pour le fluide (9), disposés de telle façon que la sortie dudit fluide d'un élément supérieur débouche en face de l'entrée du fluide dans l'élément immédiatement inférieur et en ce qu'une pompe (23) est apte à refouler, directement ou indirectement, ledit fluide à l'entrée de l'élément supérieur et à reprendre le mélange en aspiration à la sortie de l'élément inférieur de manière que les particules (9) entraînées par l'écoulement de l'électrolyte effectuent dans les éléments successifs des parcours aller et retour parallèles en zig-zag et d'altitude décroissante en s'appuyant continuellement sur la face négative (6) du collecteur de courant (3) de chaque élément (20).

14. Batterie selon la revendication 13, caractérisé en ce que les veines parallèles d'écoulement du fluide délimitées par les canaux de transfert (12) et les canaux axiaux (15) des éléments superposés sont alimentées successivement en mélange par un organe de distribution tournant ou alternatif qui périodiquement obture ou, le cas échéant, ouvre les entrées des canaux (12,15) délimitant les veines d'écoulement du mélange des particules (9) et de l'électrolyte.

FIG.1

FIG.2

FIG.3

FIG.4

0108002

FIG.5

FIG.6

0108002

Office européen
des brevets

**RAPPORT DE RECHERCHE EUROPEENNE**

Numéro de la demande

EP  83 40 2019

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A-2 360 999  (MICHELIN & CIE) * Revendications 1,2,4,7,9,24,26,28-30; page 1, lignes 6-29; page 3, lignes 24-33; page 4, ligne 22 - page 6, ligne 5; figures 1-4,7; page 8, lignes 29-39; page 9, lignes 14-23, 24-39; page 10, ligne 11; page 13, ligne 20 - page 15, ligne 12; page 15, lignes 17-24 * | 1 | H 01 M  8/18<br>C 25 C  7/00<br>H 01 M  8/22 |
| Y | FR-A-2 361 001  (MICHELIN & CIE) * Figures 1,9-11; revendications 1,24,26,27; page 1, lignes 6-34; page 4, lignes 5-9; page 11, ligne 29 - page 14, ligne 33; page 17, lignes 6-20; page 18, lignes 16-19 * | 1,13 | |

DOMAINES TECHNIQUES
RECHERCHES (Int. Cl. ³)

| Catégorie | Citation | Revendication | Domaines |
|---|---|---|---|
| Y | FR-A-2 361 000  (MICHELIN & CIE) * Revendications 1,29,30; figures 1,6,7; page 1, lignes 6-22; page 10, ligne 26 - page 12, ligne 36; page 13, lignes 32-35; page 14, lignes 1-33 * | 1,6,8 | H 01 M  8/22<br>H 01 M  8/18<br>C 25 C  7/00<br>C 25 B  9/00<br>H 01 M  8/00 |
| Y | FR-A-2 379 174  (MICHELIN & CIE) * Revendications 1,2,7,8,11; figure 1; page 4, lignes 1-22; page 6, lignes 25-31 * | 1 | |

-/-

Le présent rapport de recherche a été établi pour toutes les revendications

| Lieu de la recherche<br>LA HAYE | Date d'achèvement de la recherche<br>25-01-1984 | Examinateur<br>D'HONDT J.W. |
|---|---|---|

Office européen
des brevets

**RAPPORT DE RECHERCHE EUROPEENNE**

| | **DOCUMENTS CONSIDERES COMME PERTINENTS** | | Page 2 |
|---|---|---|---|
| Catégorie | Citation du document avec indication, en cas de besoin, des parties pertinentes | Revendication concernée | CLASSEMENT DE LA DEMANDE (Int. Cl 3) |
| Y | FR-A-2 291 613 (SORAPEC SOCIETE DE RECHERCHES ET D'APPLICATIONS ELECTROCHIMIQUES) * Revendications 1,3,4,5,7-9 * | 1,5 | |
| Y | FR-A-1 557 339 (NAT. RESEARCH DEVELOPMENT CORP.) * Résumé, point A1,2,3; page 1, colonne de droite, lignes 8-12; page 2, colonne de droite, paragraphe 4; page 3, colonne de gauche, paragraphe 5 - colonne de droite, paragraphe 4 * | 1 | |
| Y | DE-A-2 057 606 (LANCY LABORATORIES) * Revendications 1,13,18 * | 1 - | |
| Y | DE-A-2 105 038 (KAWADA, TOMOYOSHI) * Revendication 1; page 22, ligne 32 - page 23, ligne 4; figure 2 * | 10 | DOMAINES TECHNIQUES RECHERCHES (Int. Cl 3) |
| A | FR-A-2 318 946 (COMP. GEN. D'ELECTRICITE) * Revendications 1,2; page 3, lignes 18-22 * | | |
| A | FR-A-2 273 089 (PAREL S.A.) | | |

Le present rapport de recherche a ete etabli pour toutes les revendications

| Lieu de la recherche LA HAYE | Date d'achèvement de la recherche 25-01-1984 | Examinateur D'HONDT J.W. |
|---|---|---|